# EUROPEAN PATENT APPLICATION

(11) **EP 4 647 377 A1**
(43) Date of publication of application: **12.11.2025**
(21) Application number: 25174519.6
(22) Date of filing: 06.05.2025
(51) Int. Cl.: B65H 1/14, B65H 29/50, B65H 31/02, B65H 7/02

(54) **DOCUMENT FEEDING DEVICE AND IMAGE SCANNING APPARATUS**

(30) Priority: 09.05.2024 JP 2024076294
(71) Applicant: KYOCERA Document Solutions Inc., Osaka-shi, Osaka 540-8585 (JP)
(72) Inventor: KANDA, Mutsuki, Osaka-shi, Osaka, 540-8585, (JP)
(74) Representative: Winter, Brandl - Partnerschaft mbB

(57) **Abstract**

In a document feeding device (4), an ejection port (15) outputs a document sheet to an output tray (14). A first lifting device (22) lifts and lowers a feeding tray (11). A second lifting device (23) lifts and lowers the ejection port. A feeding-tray sheet sensor (41) detects that there is a document sheet on the feeding tray. A feeding-tray upperlimit sensor (42) detects that the feeding tray reaches a first upperlimit height position. Further, the collision prevention sensor (43) is lifted and lowered in conjunction with the feeding tray, and detects that the ejection port reaches a second upperlimit height position. An upperlimit of a movable range of the ejection port is set to be the second upperlimit height position detected in a condition that the feeding tray without any document sheets reaches the first upperlimit height position.

## Description

### BACKGROUND

### 1. FIELD OF THE PRESENT INVENTION

The present invention relates to a document feeding device and an image scanning apparatus.

### 2. DESCRIPTION OF THE RELATED ART

A document feeding device includes a liftable feeding tray and a sheet output tray, and transports a document sheet along a transportation path from the feeding tray to the sheet output tray through an ejection port. Further, this document feeding device also lifts and lowers the ejection port correspondingly to a height position of an upper surface of a sheet bunch on the output tray.

In such a document feeding device, installed are (a) an output-tray sheet amount sensor that detects an upperlimit height position of a sheet bunch on an output tray to control the ejection port so as not to make the sheet bunch contact with the ejection port, (b) a feeding-tray back side sensor that detects that the ejection port reaches its upperlimit position in a height direction so as not to make a feeding tray contact with the ejection port, and the like. Further, other sensors are also installed such as a sensor that detects the ejection port reaches an upperlimit of a movable range so as not to be lifted up over the upperlimit in order to restrain mechanical malfunction.

As mentioned, sorts of sensors are required to be installed, and consequently, a cost of the document feeding device is high.

### SUMMARY

A document feeding device according to the present invention includes a feeding tray on which a document sheet is put, an output tray for the document sheet, a transportation device, an ejection port, a first lifting device, a second lifting device, a feeding-tray sheet sensor, a feeding-tray upperlimit sensor, an output-tray sheet amount sensor, and a collision prevention sensor. The transportation device is configured to transport the document sheet along a transportation path from the feeding tray to the output tray. The ejection port is configured to output at an end of the transportation path the document sheet to the output tray. The first lifting device is configured to lift and lower the feeding tray. The second lifting device is configured to lift and lower the ejection port. The feeding-tray sheet sensor is configured to detect that there is a document sheet on the feeding tray. The feeding-tray upperlimit sensor is configured to detect that the feeding tray reaches a first upperlimit height position. The output-tray sheet amount sensor is configured to detect a height position of an upper surface of a sheet bunch of the document sheet on the output tray. Further, the collision prevention sensor is lifted and lowered in conjunction with the feeding tray, and detects that the ejection port reaches a second upperlimit height position that is an upperlimit height position at which the ejection port does not make contact with the feeding tray. An upperlimit of a movable range of the ejection port is set to be the second upperlimit height position detected by the collision prevention sensor in a condition that the feeding tray without any document sheets reaches the first upperlimit height position.

An image scanning apparatus according to the present invention includes the document feeding device and an image sensor. The image sensor is configured to scan an image of a document sheet at a predetermined position in a transportation path of the document feeding device.

These and other objects, features and advantages of the present invention will become more apparent upon reading of the following detailed description along with the accompanied drawings.

### BRIEF DESCRIPTION OF THE DRAWINGS

Fig. 1 shows a side view an internal configuration of an image scanning apparatus in the present invention;
Fig. 2 shows a block diagram that indicates an electronic configuration of an automatic document feeder 4 shown in Fig. 1;
Fig. 3 shows a diagram that indicates an example of a lifting mechanism of an ejection port 15 shown in Fig. 1;
Fig. 4 shows a diagram that explains an upperlimit height position of the ejection port 15 shown in Fig. 1;
Fig. 5 shows a diagram that explains upperlimit of a movable range of the ejection port 15 shown in Fig. 1;
Fig. 6 shows a flowchart that explains a behavior of the image scanning apparatus shown in Figs. 1 and 2 (1/2); and
Fig. 7 shows a flowchart that explains a behavior of the image scanning apparatus shown in Figs. 1 and 2 (2/2).

### DETAILED DESCRIPTION

Hereinafter, an embodiment according to an aspect of the present invention will be explained with reference to drawings.

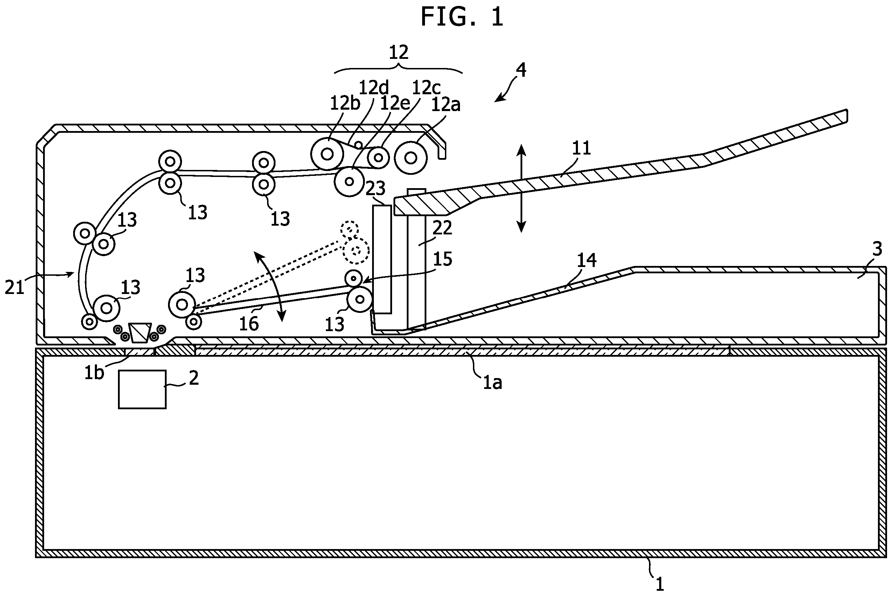

Fig. 1 shows a side view an internal configuration of an image scanning apparatus in the present invention. The image scanning apparatus shown in Fig. 1 is an apparatus such as scanner, copier, facsimile device, or multi function peripheral, and includes an auto document feeder as a document feeding device.

The image scanning apparatus shown in Fig. 1 includes an apparatus main body 1, contact glasses 1a and 1b arranged on an upper surface of the main body 1, an image sensor 2, and a document cover 3. The document cover 3 includes the auto document feeder 4.

The contact glass 1a is a transparent member on which a document sheet is put when performing image scanning without the auto document feeder 4. The contact glass 1b is a transparent member on which a document sheet passes when performing image scanning of a document image while automatically transporting a document with the auto document feeder 4.

The image sensor 2 scans a document image from a document sheet. Specifically, the image sensor 2 is a sensor that optically scans an image of a document sheet that passes at a predetermined position in a transportation path of the document sheet when performing image scanning of a document image while automatically transporting the document sheet with the auto document feeder 4. The image sensor 2 scans the document image line by line. The image sensor 2 include a light source (light emitting diode or the like) and a light receiving element (line sensor or the like), and causes the light source to emit light, and causes the light receiving element to detect reflection light that reflects a document sheet or the like through the contact glass 1a or 1b and outputs an electric signal corresponding to a light amount of the reflection light. A controller 51 mentioned below receives this electric signal, and generates a document image (i.e. image data of the document image) on the basis of this electric signal.

A document cover 3 is a rotatable member installed so as to be capable of contacting a surface area of the contact glass 1a when it rotates, and presses a document sheet against the contact glass 1a and prevents environmental light from entering through the contact glass 1a to the inside of the apparatus during image scanning. Further, the auto document feeder 4 includes a feeding tray 11 on which a document sheet is put, and a transportation device 21 that transports a document sheet from the feeding tray 11 to an output tray 14 through a scanning position of the image sensor 2; and causes a document sheet put on the feeding tray 11 to pass at a position on the contact glass 1b sheet by sheet and output the document sheet onto the output tray 14. Specifically, the transportation device 21 includes a paper feeding unit 12 and transportation rollers 13 arranged along the transportation path, and feeds a document sheet using the paper feeding unit 12 and transports the document sheet using the transportation rollers 13. The paper feeding unit 12 includes a feeding roller 12a, a driving roller 12b, a driven roller 12c, a transportation belt 12d, and an auxiliary roller 12e, and draws a document sheet on the feeding tray 11 into the transportation path along the transportation belt 12d using the feeding roller 12a sheet by sheet.

Further, the image sensor 2 can change an image scanning position using an unshown driving device; and when performing image scanning with the auto document feeder 4, the image scanning position of the image sensor 2 is set as a passing position of a document sheet on the contact glass 1b, and the image sensor 2 optically scans an image of the document sheet in transportation by the auto document feeder 4 when the document sheet passes on the contact glass 1b. Here, the image sensor 2 is a color image sensor, and scans document images of plural colors such as RGB at image scanning positions different from each other along a transportation direction. In this embodiment, a CIS (Contact Image Sensor) is used as the image sensor 2; and when performing image scanning with the auto document feeder 4, the image sensor 2 is arranged right below the contact glass 1b.

The feeding roller 12a, the driving roller 12b and the transportation rollers 13 are driven by a driving device (not shown) such as motor.

The output tray 14 is a tray on which piled are document sheets that are outputted and fallen through an ejection port 15 at an end of the transportation path. The ejection port 15 includes a transportation roller 13 at the end of the transportation path, and outputs document sheets onto the output tray 14 at the end of the transportation path.

Further, the image scanning apparatus shown in Fig. 1 includes a lifting device 22 that lifts and lowers the feeding tray 11 in accordance with an existing lifting and lowering manner, and a lifting device 23 that lifts and lowers the ejection port 15 in accordance with an existing lifting and lowering manner. Specifically, the lifting device 23 performs lifting and lowering of the ejection port 15 on the basis of belt drive or the like, and when lifting or lowering of the ejection port 15, the termination transportation path 16 that connect to the ejection port 15 is rotated around a predetermined support point as a center.

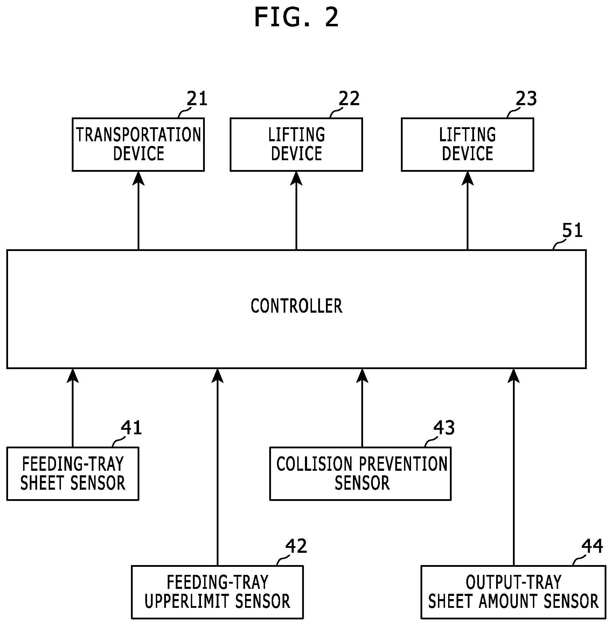

Fig. 2 shows a block diagram that indicates an electronic configuration of an automatic document feeder 4 shown in Fig. 1. As shown in Fig. 2, this image scanning apparatus further includes a feeding-tray sheet sensor 41, a feeding-tray upperlimit sensor 42, a collision prevention sensor 43, an output-tray sheet amount sensor 44, and a controller 51.

The feeding-tray sheet sensor 41 detects a document sheet on the feeding tray 11, and outputs a sensor signal that indicates existence of a document sheet.

The feeding-tray upperlimit sensor 42 is a sensor that detects that the feeding tray 11 reaches a first upperlimit height position. Specifically, the feeding-tray upperlimit sensor 42 detects that the feeding tray 11 or an upper surface of a document sheet put on the feeding tray 11 makes contact with the feeding roller 12a. Therefore, a height position of the feeding tray 11 that the feeding tray 11 or an upper surface of a documents sheet put on the feeding tray 11 makes contact with the feeding roller 12a is the first upperlimit height position.

The collision prevention sensor 43 is lifted and lowered in conjunction with the feeding tray 11, and detects that the ejection port 15 reaches a second upperlimit height position (i.e. an upperlimit height position of the ejection port 15) that is an upperlimit height position at which the ejection port 15 does not make contact with the feeding tray 11.

The output-tray sheet amount sensor 44 detects a height position of an upper surface of a sheet bunch of a document sheet (i.e. a thickness of a document sheet bunch) on the output tray 14. For example, the output-tray sheet amount sensor 44 is a reflection-type optical sensor.

The controller 51 includes a processor that executes a program, an ASIC (Application Specific Integrated Circuit) and/or the like, and controls the auto document feeder 4 (i.e. the transportation device 21, the lifting device 22, 23 and the like) and thereby performs transportation of a document sheet, and performs image scanning using the image sensor 2 and thereby acquires image data of an image of the document sheet (i.e. a document image).

Further, the controller 51 controls the lifting device 22 and thereby lifts and lowers the feeding tray 11 and the collision prevention sensor 43, and controls the lifting device 23 and thereby lifts the ejection port 15 and the output-tray sheet amount sensor 44 correspondingly to the height position of the upper surface of the sheet bunch detected by the output-tray sheet amount sensor 44.

Specifically, the controller 51 controls the lifting device 23 and thereby arranges the ejection port 15 at a height position apart by a predetermined constant distance from the upper surface of the sheet bunch of the document sheet(s) detected by the output-tray sheet amount sensor 44. Therefore, while the document sheet(s) on the output tray 14 increases, the ejection port 15 is lifted up.

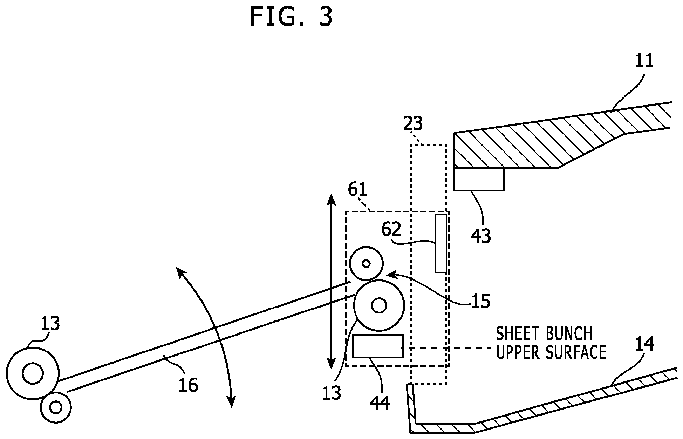

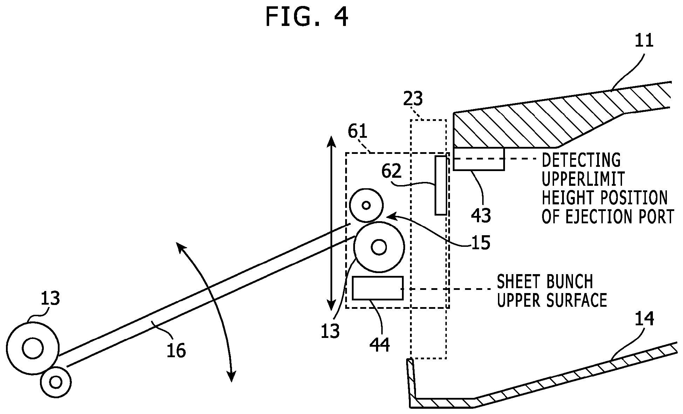

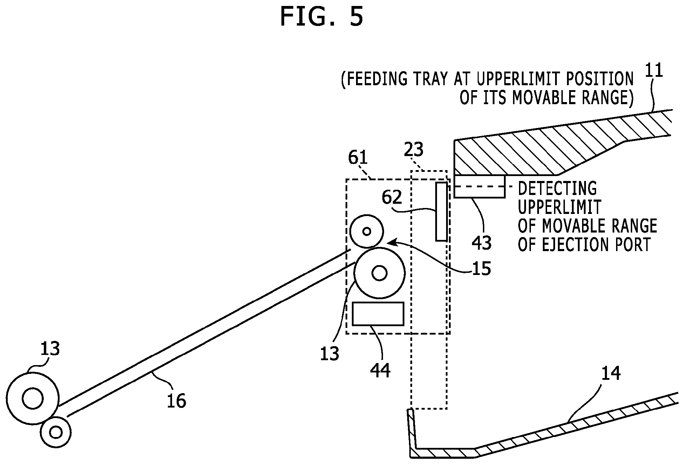

Fig. 3 shows a diagram that indicates an example of a lifting mechanism of the ejection port 15 shown in Fig. 1. Fig. 4 shows a diagram that explains an upperlimit height position of the ejection port 15 shown in Fig. 1. Fig. 5 shows a diagram that explains upperlimit of a movable range of the ejection port 15 shown in Fig. 1.

For example, as shown in Fig. 3, the lifting device 23 lifts and lowers a carriage 61 and the ejection port 15 and the output-tray sheet amount sensor 44 are fixed to the carriage 61. Further, a shield member 62 is also fixed to the carriage 61. The shield member 62 is a member of a planer shape, for example.

The collision prevention sensor 43 is an optical sensor (e.g. reflection-type optical sensor), of which a receiving light amount changes correspondingly to whether the shield member 62 is at a detection position of the collision prevention sensor 43 or not.

The controller 51 lifts the shield member 62 with the ejection port 15 and the output-tray sheet amount sensor 44 correspondingly to the height position of the aforementioned upper surface using the lifting device 23. The shield member 62 is arranged at a relative position to the ejection port 15 such that (a) the shield member 62 is located at the detection position when the ejection port 15 reaches the second upperlimit height position as shown in Fig. 4, for example, and (b) a distance between the ejection port 15 and the feeding tray 11 becomes a predetermined value when the ejection port 15 reaches the second upperlimit height position.

Further, as shown in Fig. 5, for example, an upperlimit of a movable range of the ejection port 15 is set to be the second upperlimit height position detected by the collision prevention sensor 43 in a condition that the feeding tray 11 without any document sheets reaches the first upperlimit height position (i.e. in a condition that the feeding tray 11 reaches an upperlimit of a movable range of the feeding tray 11). Thus, the upperlimit of the movable range of the ejection port 15 is detected as the second upperlimit height position by the collision prevention sensor 43, such that the ejection port 15 is not lifted up over the upperlimit of the movable range. Therefore, not installed is another sensor to detect that the ejection port 15 reaches the upperlimit of the movable range of it.

In a case that there are not any document sheets on the feeding tray 11 when the ejection port 15 reaches the second upperlimit height position, if the feeding tray 11 reaches the first upperlimit height position, then the controller 51 lowers the feeding tray 11 by a distance shorter than the aforementioned predetermined value (by a small distance), and otherwise, if the feeding tray 11 does not reach the first upperlimit height position, then the controller 51 does not lower the feeding tray 11.

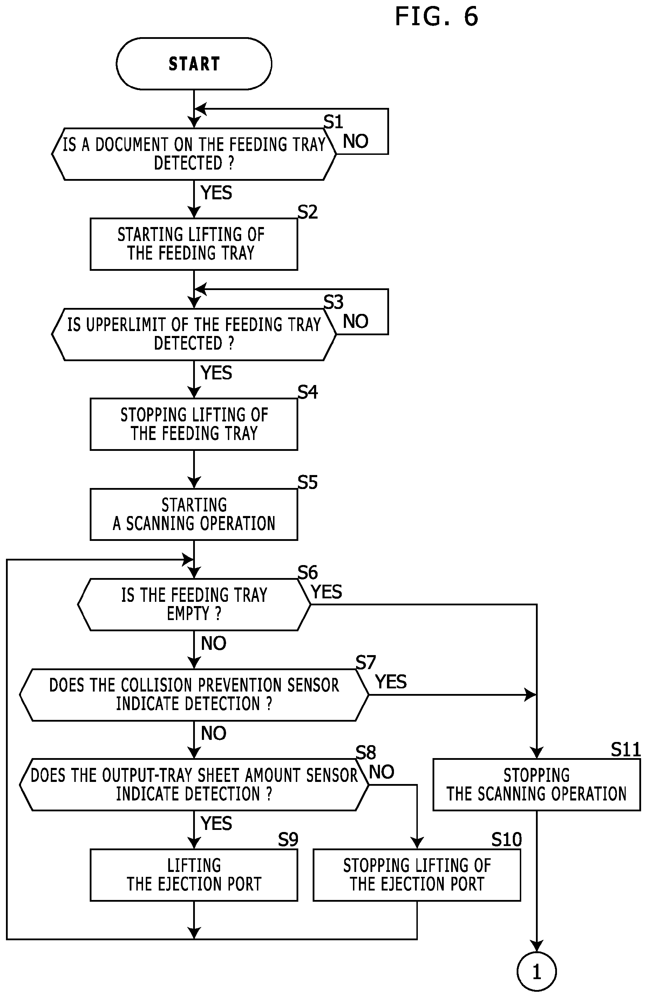

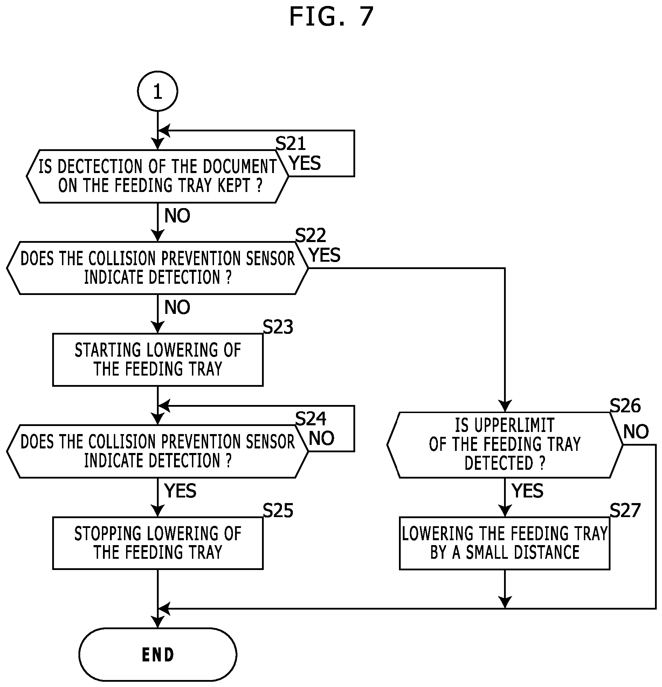

The following part explains a behavior of the aforementioned image scanning apparatus. Figs. 6 and 7 show a flowchart that explains a behavior of the image scanning apparatus shown in Figs. 1 and 2.

When document sheets on the feeding tray 11 are detected by the feeding-tray sheet sensor 41 (in Step S1), the controller 51 controls the lifting device 22 and thereby starts lifting of the feeding tray 11 (in Step S2); and when it is detected by the feeding-tray upperlimit sensor 42 that the feeding tray 11 reaches an upperlimit of it (in Step S3), the controller 51 controls the lifting device 22 and thereby stops lifting of the feeding tray 11 (in Step S4). Consequently, the document sheet on the feeding tray 11 makes contact with the feeding roller 12a.

Subsequently, the controller 51 starts a scanning operation for the document sheets (in Step S5). Specifically, in the scanning operation, the controller 51 controls the transportation device 21 and thereby feeds and transports the document sheets sheet by sheet, scans an image of each of the document sheets using the image sensor 2, and outputs each of the document sheets onto the output tray 14.

While the document sheets are processed in the scanning operation, the controller 51 watches whether the feeding tray 11 is empty or not (in Step S6), whether the collision prevention sensor 43 detects that the ejection port 15 reaches the second upperlimit height position or not (in Step S7), and whether the output-tray sheet amount sensor 44 detects a sheet bunch (i.e. an upper end part of it) of the document sheets on the output tray 14 or not (in Step S8).

If the output-tray sheet amount sensor 44 detects a sheet bunch (i.e. an upper end part of it) of the document sheets on the output tray 14, then the controller 51 controls the lifting device 23 and thereby lifts up the ejection port 15 (in Step S9), and if the output-tray sheet amount sensor 44 does not detect a sheet bunch (i.e. an upper end part of it) of the document sheets on the output tray 14 any longer, then the controller 51 controls the lifting device 23 and thereby stops lifting of the ejection port 15 (in Step S10). Therefore, the ejection port 15 is lifted up correspondingly to an amount of the document sheets outputted onto the output tray 14.

It should be noted that when the feeding-tray upperlimit sensor 42 does not detect that the feeding tray 11 reaches the upperlimit height position any longer, the controller 51 controls the lifting device 22 and thereby lifts the feeding tray 11 until the feeding-tray upperlimit sensor 42 detects that the feeding tray 11 reaches the upperlimit height position.

Further, if the feeding tray 11 becomes empty or the collision prevention sensor 43 detects that the ejection port 15 reaches the second upperlimit height position, then the controller 51 stops the scanning operation (in Step S11). If there is a document sheet being processed, after the document sheet is processed, the scanning operation is stopped.

After stopping the scanning operation, the controller 51 repeatedly determines whether a document sheet remains on the feeding tray 11 or not (in Step S21). Here, if all of the document sheets have been processed in the scanning operation and are on the output tray 14, it is immediately determined that no document sheets remain on the feeding tray 11. Otherwise, if the scanning operation is stopped because the collision prevention sensor 43 detects that the ejection port 15 reaches the second upperlimit height position, it is determined that no document sheets remain on the feeding tray 11 when a residual document sheet part on the feeding tray 11 is removed by a user.

Subsequently, when all of the document sheets disappear on the feeding tray 11, the controller 51 determines whether the collision prevention sensor 43 detects that the ejection port 15 reaches the second upperlimit height position or not (in Step S22). If it is determined that the collision prevention sensor 43 does not detect that the ejection port 15 reaches the second upperlimit height position, then the controller 51 controls the lifting device 22 and thereby starts lowering of the feeding tray 11 (in Step S23); and if the collision prevention sensor 43 detects that the ejection port 15 reaches the second upperlimit height position (in Step S24), the controller controls the lifting device 22 and thereby stops lowering of the feeding tray 11 (in Step S25).

Contrarily, if it is determined in Step S22 that the collision prevention sensor 43 detects that the ejection port 15 reaches the second upperlimit height position, then the controller 51 determines whether the feeding tray 11 reaches the upperlimit height position or not (in Step S26). Here, if a residual document sheet part on the feeding tray 11 is removed by a user and the feeding tray 11 is not located at the upperlimit height position as mentioned, then it is determined that the feeding tray 11 does not reach the upperlimit height position.

If it is determined that the feeding tray 11 reaches the upperlimit height position, then the controller 51 controls the lifting device 22 and thereby lowers the feeding tray 11 by a distance shorter than the aforementioned predetermined value (i.e. by a small distance) (in Step S27). In a height direction, the ejection port 15 is arranged at a position corresponding to a thickness of a sheet bunch on the output tray 14, and the ejection port 15 is located apart by the aforementioned predetermined value from the feeding tray 11, and therefore, even when the feeding tray 11 is lowered by such a small distance, the feeding tray 11 does not make contact with the sheet bunch on the output tray 14.

Contrarily, if it is determined that the feeding tray 11 does not reach the upperlimit height position, the controller 51 does not lower the feeding tray 11. In such a case, since a current height position of the feeding tray 11 is not clear, lowering the feeding tray 11 may cause the feeding tray 11 to make contact with the sheet bunch on the output tray 14, and therefore, the controller 51 does not lower the feeding tray 11.

As mentioned, in the aforementioned embodiment, the transportation device 21 transports a document sheet along a transportation path from the feeding tray 11 to the output tray 14. The ejection port 15 outputs the document sheet onto the output tray 14 at the end of the transportation path. The lifting device 22 lifts and lowers the feeding tray 11 and the lifting device 23 lifts and lowers the ejection port 15. The feeding-tray sheet sensor 41 detects that there is a document sheet on the feeding tray 11. The feeding-tray upperlimit sensor 42 detects that the feeding tray 11 reaches the first upperlimit height position. The output-tray sheet amount sensor 44 detects a height position of an upper surface of a sheet bunch of document sheets on the output tray 14. The collision prevention sensor 43 is lifted and lowered in conjunction with the feeding tray 11, and detects that the ejection port 15 reaches the second upperlimit height position that is an upperlimit height position at which the ejection port 15 does not make contact with the feeding tray 11. An upperlimit of a movable range of the ejection port 15 is set to be the second upperlimit height position detected by the collision prevention sensor 43 in a condition that the feeding tray 11 without any document sheets reaches the first upperlimit height position.

Consequently, using the collision prevention sensor **4,** detected are not only that the ejection port 15 reaches the upperlimit height position but that the ejection port 15 reaches the upperlimit of the movable range, and therefore, another sensor to detect that the ejection port 15 reaches the upperlimit of the movable range is not required to be installed, and the number of the installed sensors is small. Consequently, a cost of the document feeding device is relatively low.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. A document feeding device, comprising:
a feeding tray on which a document sheet is put; an output tray for the document sheet;
a transportation device configured to transport the document sheet along a transportation path from the feeding tray to the output tray;
an ejection port configured to output at an end of the transportation path the document sheet to the output tray; a first lifting device configured to lift and lower the feeding tray;
a second lifting device configured to lift and lower the ejection port;
a feeding-tray sheet sensor configured to detect that there is a document sheet on the feeding tray;
a feeding-tray upperlimit sensor configured to detect that the feeding tray reaches a first upperlimit height position;
an output-tray sheet amount sensor configured to detect a height position of an upper surface of a sheet bunch of the document sheet on the output tray; and
a collision prevention sensor;
wherein the collision prevention sensor is lifted and lowered in conjunction with the feeding tray; and detects that the ejection port reaches a second upperlimit height position that is an upperlimit height position at which the ejection port does not make contact with the feeding tray; and
an upperlimit of a movable range of the ejection port is set to be the second upperlimit height position detected by the collision prevention sensor in a condition that the feeding tray without any document sheets reaches the first upperlimit height position.

2. The document feeding device according to claim 1, further comprising a controller;
wherein the controller lifts and lowers the feeding tray and the collision prevention sensor using the first lifting device; and
the controller lifts and lowers the output tray and the output-tray sheet amount sensor correspondingly to the height position of the upper surface using the second lifting device.

3. The document feeding device according to claim 2, further comprising a shield member;
wherein the collision prevention sensor is an optical sensor of which a receiving light amount changes correspondingly to whether the shield member is at a detection position of the collision prevention sensor or not;
the controller lifts the shield member with the ejection port and the output-tray sheet amount sensor correspondingly to the height position of the upper surface using the second lifting device; and
the shield member is arranged at a relative position to the ejection port such that (a) the shield member is located at the detection position when the ejection port reaches the second upperlimit height position and (b) a distance between the ejection port and the feeding tray becomes a predetermined value when the ejection port reaches the second upperlimit height position.

4. The document feeding device according to claim 3, wherein in a case that there are not any document sheets on the feeding tray when the ejection port reaches the second upperlimit height position, if the feeding tray reaches the first upperlimit height position, the controller lowers the feeding tray by a distance shorter than the predetermined value, and if the feeding tray does not reach the first upperlimit height position, the controller does not lower the feeding tray.

5. An image scanning apparatus, comprising:
a document feeding device according to any of claims 1 to 4; and
an image sensor configured to scan an image of the document sheet at a predetermined position in the transportation path of the document feeding device.
